# EUROPÄISCHE PATENTANMELDUNG

(11) **EP 1 217 638 A1**
(43) Veröffentlichungstag der Anmeldung: **26.06.2002**
(21) Anmeldenummer: 00811219.5
(22) Anmeldetag: 21.12.2000
(51) Int. Cl.: H01G 4/228

(54) **Kondensator für ein Leistungshalbleitermodul**

(71) Anmelder: ABB Schweiz AG, 5400 Baden (CH)
(72) Erfinder: Guggisberg, Beat, 5417 Untersiggenthal (CH); Pieder, Joerg, 7013 Domat, Ems (CH)
(74) Vertreter: ABB Patent Attorneys

(57) **Zusammenfassung**

Es wird ein Kondensator für ein Leistungshalbleitermodul (7) angegeben, der ein Kondensatorgehäuse (1) umfasst und Poldurchführungen (3a; 3b) vom Inneren des Gehäuses (1) nach aussen aufweist, wobei eine erste Poldurchführung (3a) einen Minuspol und eine zweite Poldurchführung (3b) einen Pluspol bildet. Weiterhin sind die Poldurchführungen (3a; 3b) jeweils einstückig ausgebildet und Anschlussenden (8) der Poldurchführungen (3a; 3b) jeweils mit Anschlussklemmen (5) des Leistungshalbleitermoduls (7) verbindbar ausgeführt. Dadurch wird ein besonders einfacher Aufbau eines Kondensator mir einer geringen Gesamtinduktivität erreicht.

## Beschreibung

### Technisches Gebiet

Die vorliegende Erfindung bezieht sich auf das Gebiet der Leistungselektronik. Sie betrifft einen Kondensator für ein Leistungshalbleitermodul gemäss dem Oberbegriff des unabhängigen Anspruchs.

### Stand der Technik

Leistungshalbleitermodule werden heute in einer Fülle von Stromrichterschaltungen eingesetzt. Gängigerweise ist ein Leistungshalbleitermodul aus mehreren Leistungshalbleitern aufgebaut. Solche Leistungshalbleitermodule sind beim Einsatz in Stromrichterschaltungen, insbesondere bei als Wechselrichterschaltungen ausgeführten Stromrichterschaltungen, untereinander parallel geschaltet, um einen hohen Strom bei einer vorgegebenen hohen Leistung schalten zu können. Die Leistungshalbleitermodule sind weiterhin, insbesondere bei Wechselrichterschaltungen an einen oder mehrere Kondensatoren angeschlossen, die in der Regel als Energiespeicher eingesetzt sind.

Ein solcher Kondensator weist im Inneren seines Gehäuses einen Kondensatorwickel auf. Der Kondensatorwickel ist aus im wesentlichen zwei leitenden und gegeneinander isolierten Folien aufgebaut, wobei die Folien beispielsweise ineinander gewickelt sind. Jede Folie ist mit einer Poldurchführung verbunden, die jeweils durch das Kondensatorgehäuse führt, wobei eine erste Poldurchführung ausserhalb des Kondensatorgehäuses einen Pluspolanschluss und eine zweite Poldurchführung einen Minuspolanschluss bildet.

Zur Verbindung der einzelnen Polanschlüsse des Kondensators mit dem Leistungshalbleitermodul wird eine herkömmliche niederinduktive Verschienung eingesetzt, wie sie beispielsweise aus "Power Conversion Applications, ELDRE CORPORATION, http://www.eldre.com, 16.11.2000" bekannt ist. Dieses Verschienung wird dazu zum einen mittels Verbindungsmitteln jeweils mit dem Pluspolanschluss und dem Minuspolanschluss des Kondensators verbunden und zum anderen jeweils mit den zugehörigen Anschlussklemmen des Leistungshalbleitermoduls verbunden.

Da die heute verwendeten Halbleitermodule im Schaltbetrieb eine hohe Stromsteilheit erzeugen, muss die Gesamtinduktivität möglichst klein sein, damit bei einem Schaltvorgang des Leistungshalbleitermoduls eine aus einer grossen Gesamtinduktivität resultierende Überspannung das Halbleitermodul nicht zerstört. Die Gesamtinduktivität ist durch die Induktivität des Kondensatorwickels, die Durchführung, die Verbindungsmittel, die Verschienung und durch die Induktivität des Leistungshalbleitermoduls gebildet. Die Verschienung ist zwar, wie in "Power Conversion Applications, ELDRE CORPORATION, http://www.eldre.com, 16.11.2000" angegeben, bereits niederinduktiv ausgeführt, jedoch ist die Gesamtinduktivität nachwievor durch die anderen vorstehend beschriebenen und die Gesamtinduktivität massgeblich bestimmenden Komponenten, insbesondere durch die Verbindungsmittel, sehr hoch, wodurch das Leistungshalbleitermodul einem erhöhten Risiko der Zerstörung durch Überspannung und/oder einem verkürzten Alterungsprozess infolge der gehäuft auftretenden erhöhten Spannung unterliegt.

Es sind zwar Beschaltungsmassnahmen, wie beispielsweise die Beschaltung der Anschlussklemmen des Leistungshalbleitermoduls mit Clamp-Kondensatoren, zur Minderung eventuell auftretender Überspannungen bekannt, jedoch verursachen solche Massnahmen einen hohen Montage-, Material- und somit Kostenaufwand.

### Darstellung der Erfindung

Aufgabe der Erfindung ist es deshalb, einen Kondensator für ein Leistungshalbleitermodul derart auszubilden, dass die durch Kondensatorelemente und Leistungshalbleitermodulelemente gebildete Gesamtinduktivität reduziert werden kann und gleichzeitig der Montageund Materialaufwand minimiert wird. Diese Aufgabe wird durch die Merkmale des Anspruchs 1 gelöst. In den Unteransprüchen sind vorteilhafte Weiterbildungen der Erfindung angegeben.

Beim erfindungsgemässen Kondensator für ein Leistungshalbleitermodul umfasst der Kondensator ein Kondensatorgehäuse und weist Poldurchführungen vom Inneren des Kondensatorgehäuses nach aussen auf, wobei die Poldurchführungen erfindungsgemäss jeweils einstückig ausgebildet sind. Desweiteren sind Anschlussenden der Poldurchführungen erfindungsgemäss jeweils mit Anschlussklemmen des Leistungshalbleitermoduls verbindbar ausgeführt. Dadurch kann vorteilhaft auf eine Verschienung und auf dazu gängigerweise notwendige Verbindungsmittel verzichtet werden, wodurch eine besonders effektive Reduktion der Gesamtinduktivität erreicht wird und der Material- und Kostenaufwand sowie der Montageaufwand gering gehalten werden kann. Zudem wird durch die reduzierte Gesamtinduktivität ein eventuelles Auftreten einer Überspannung bei einem Schaltvorgang des Leistungshalbleitermoduls infolge einer zu grossen Gesamtinduktivität minimiert. Ferner erhöht sich vorteilhaft die Zuverlässigkeit des Kondensators und des Leistungshalbleitermoduls aufgrund der geringeren Elementeanzahl.

In einem bevorzugten Ausführungsbeispiel des erfindungsgemässen Kondensators ist ein Isolationskörper vorgesehen, der die Poldurchführungen gegeneinander und gegenüber dem Kondensatorgehäuse elektrisch isoliert. Einem eventuellen Auftreten eines Kurzschlusses infolge von Spannungsüberschlägen zwischen den Poldurchführungen kann somit vorteilhaft entgegengewirkt werden. Zudem wird ein Berühren der beiden Poldurchführungen, insbesondere bei mechanischen Einwirkungen vermieden, so dass die Poldurchführungen gegen solche Einwirkungen stabilisiert werden.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

### Kurze Beschreibung der Zeichnung

### Es zeigen:

- Fig. 1: eine schematische Darstellung einer ersten Ausführungsform eines erfindungsgemässen Kondensators für ein Leistungshalbleitermodul in der Seitenansicht,
- Fig. 2: den erfindungsgemässen Kondensator gemäss Fig. 1 in räumlicher Darstellung und
- Fig. 3: eine räumliche Darstellung einer zweiten Ausführungsform des erfindungsgemässen Kondensators für ein Leistungshalbleitermodul.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

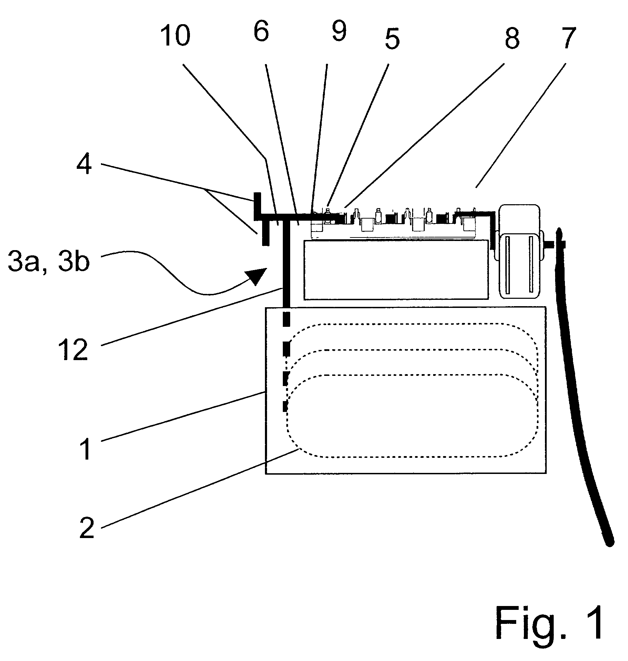

In Fig. 1 ist eine schematische Darstellung einer ersten Ausführungsform eines erfindungsgemässen Kondensators für ein Leistungshalbleitermodul 7 in der Seitenansicht gezeigt. Der Kondensator umfasst ein Kondensatorgehäuse 1, in dessen Inneren mindestens ein Kondensatorwickel 2 vorgesehen ist, der durch seinen Wickelaufbau einen Kapazitätswert festlegt. Es ist auch denkbar, dass eine plattenförmigen Anordnung anstelle des Kondensatorwickels 2 vorhanden ist. Der Kondensatorwickel 2 gemäss Fig. 1 ist gängigerweise aus im wesentlichen zwei leitenden und gegeneinander isolierenden Folien aufgebaut. Die Folien sind dabei ineinander gewickelt, wobei die einzelnen Folien in Fig. 1 der Übersichtlichkeit halber nicht dargestellt sind. Jede Folie ist mit jeweils einer Poldurchführung 3a, 3b verbunden, die jeweils vom Inneren des Kondensatorgehäuses 1 nach aussen führt. Dabei bildet eine erste Poldurchführung 3a einen Minuspol und eine zweite Poldurchführung 3b einen Pluspol des Kondensators.

Desweiteren weisen die Poldurchführungen 3a,3b ausserhalb des Kondensatorgehäuses 1 gemäss Fig. 1 erfindungsgemäss jeweils einen ersten Winkel 6 auf, der so ausgebildet ist, dass eine möglichst kurze Distanz der Verbindung des Kondensators zum Leistungshalbleitermodul 7, insbesondere zu dessen Anschlussklemmen 5 gegeben ist. Gemäss Fig. 1 ist diese kurze Distanz dadurch erreicht, dass der erste Winkel 6 mindestens annähernd rechtwinklig ausgeführt ist und den Anschlussklemmen 5 zugewandt ist. Der erste Winkel 6 ist gemäss Fig. 1 durch jeweils einen aus dem Kondensatorgehäuse 1 austretenden Teil 12 der Poldurchführungen 3a, 3b und durch eine Anschlussführung 9 der jeweiligen Poldurchführung 3a, 3b gebildet, wobei die Anschlussführung 9 der jeweiligen Poldurchführung 3a, 3b in die Richtung der Anschlussklemmen 5 verläuft. Dies bewirkt vorteilhaft eine erwünschte Reduktion der Gesamtinduktivität infolge eines geringen Materialaufwandes. Die Anschlussführungen 9 der Poldurchführungen 3a, 3b enden in Anschlussenden 8, wobei jede Anschlussführung 9 ein Anschlussende 8 aufweist. Das Anschlussende 8 bildet somit ein erstes Ende einer jeden Poldurchführung 3a, 3b ausserhalb des Kondensatorgehäuses 1.

Die Poldurchführungen 3a, 3b sind erfindungsgemäss jeweils einstückig ausgebildet, wobei die Anschlussenden 8 jeweils mit Anschlussklemmen 5 des Leistungshalbleitermoduls 7 verbindbar ausgeführt sind. Dadurch ist es möglich, eine besonders einfache Verbindung, insbesondere eine Steckverbindung zwischen dem Kondensator und den Anschlussklemmen 5 des Leistungshalbleitermoduls 7 herzustellen, die sich durch ihren geringen Montage- und Materialaufwand auszeichnet. Zur Erhöhung der mechanischen Stabilität dieser Verbindung kann die Steckverbindung zusätzlich durch eine Schraubenverbindung fixiert sein. Zudem kann auf eine aufwendige Verschienung mit dazu gängigerweise notwendigen Verbindungsmitteln zwischen den Anschlussklemmen 5 und dem Kondensator, insbesondere zwischen den Anschlussklemmen 5 und den beiden Polen des Kondensators verzichtet werden, so dass vorteilhaft weitere Montage- und Materialkosten eingespart werden können. Weiterhin wird erreicht, dass die Gesamtinduktivität, die sich aus Kondensatorelementen und Leistungshalbleitermodulelementen zusammensetzt, reduziert wird. Diese Reduktion der Gesamtinduktivität bewirkt, dass das Leistungshalbleitermodul 7 vor Überspannungen infolge von Schaltvorgängen geschützt wird, da ein Auftreten von solchen Überspannungen durch die Reduktion der Gesamtinduktivität erfolgreich minimiert wird. Ferner wird der Alterungsprozess des Leistungshalbleitermoduls 7 erheblich verlangsamt.

Die Poldurchführungen 3a, 3b weisen weiterhin gemäss Fig. 1 ausserhalb des Kondensatorgehäuses 1 im Bereich des ersten Winkels 6 jeweils einen zweiten Winkel 10 auf, der mindestens annähernd rechtwinklig ausgeführt und den Anschlussklemmen 5 abgewandt ist. Der zweite Winkel 10 ist gemäss Fig. 1 durch jeweils den aus dem Kondensatorgehäuse 1 austretenden Teil 12 der Poldurchführungen 3a, 3b und durch ein Verschienungsanschlusselement 4 der jeweiligen Poldurchführung 3a, 3b gebildet, wobei das Verschienungsanschlusselement 4 entgegen der Richtung der Anschlussführung 9 verläuft, jedoch vorzugsweise in einer Ebene mit diesem fluchtet. Denkbar ist aber auch, dass das Verschienungsanschlusselement 4 nicht in einer Ebene mit der Anschlussführung 9 fluchtet, sondern versetzt verläuft. Das Verschienungsanschlusselement 4 selbst ist vorzugsweise winkelförmig ausgebildet, wobei sich eine rechtwinklige Form als vorteilhaft erwiesen hat. Das Verschienungsanschlusselement 4 ermöglicht das Anbringen einer der Übersichtlichkeit wegen in Fig. 1 nicht gezeigten Verschienungseinrichtung, die beispielsweise der Parallelschaltung mehrerer Kondensatoren an ihren jeweils gleichartig gepolten Poldurchführungen 3a, 3b zu einer Kondensatorbatterie dient. Durch die vorzugsweise rechteckförmig ausgebildeten Verschienungsanschlusselemente 4 ist das Anbringen einer gängigen plattenförmigen Verschienungseinrichtung besonders einfach möglich, da keine besonders ausgeführte Verschienungseinrichtung benötigt wird. Die winkelförmig ausgebildeten Verschienungsanschlusselemente 4 der Poldurchführungen 3a, 3b weisen gemäss Fig. 1 zueinander entgegengesetzte Abschlussrichtungen auf, wodurch sehr einfach eine Beabstandung beim Anbringen einer vorstehend erwähnten Verschienungseinrichtung erreicht wird. Das Verschienungsanschlusselement 4 bildet zudem ein zweites Ende der zugehörigen Poldurchführung 3a, 3b ausserhalb des Kondensatorgehäuses 1. Mittels dieser Massnahme kann der Materialaufwand der Poldurchführungen 3a, 3b gering gehalten werden, wobei ferner die Gesamtinduktivität in erwünschtem Masse gering gehalten werden kann.

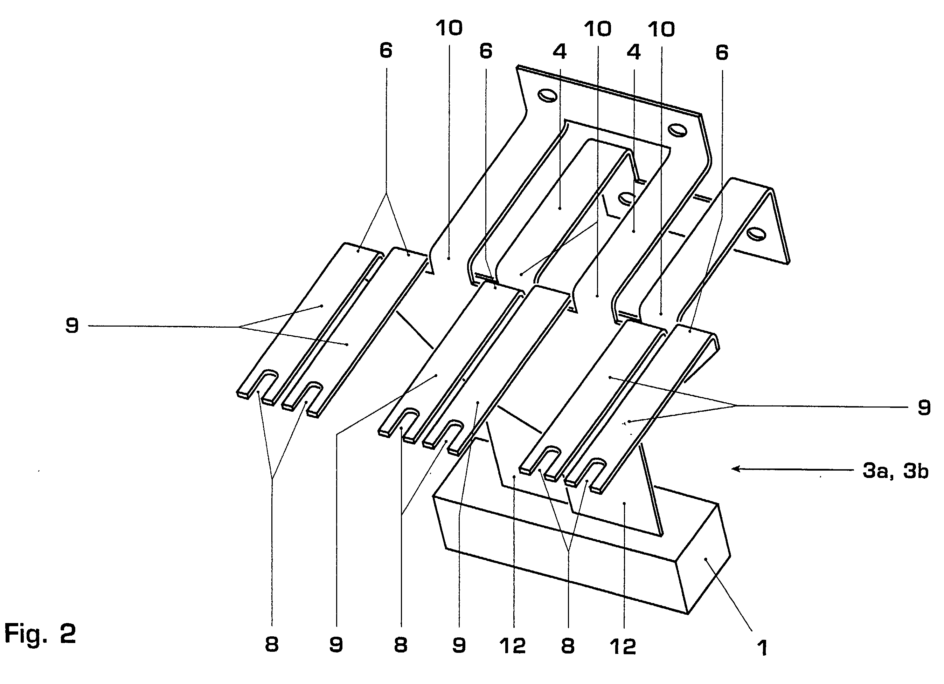

In Fig. 2 ist der erfindungsgemässe Kondensator nach Fig. 1 in räumlicher Darstellung gezeigt. Darin weisen die Poldurchführungen 3a, 3b ein plattenförmiges Profil auf und bestehen zudem aus einem elektrisch leitfähigen und niederinduktiven Material. Dadurch wird erreicht, dass die Gesamtinduktivität vorteilhaft weiter sehr effektiv reduziert werden kann. Gemäss Fig. 2 weist jede Poldurchführung 3a, 3b nach ihrem Austritt aus dem Kondensatorgehäuse 1 eine zur besseren Stromführung dienende flächige Verbreiterung bis zum ersten Winkel 6 beziehungsweise zweiten Winkel 10 auf, von der dann, wie bereits erwähnt, zum einen die Anschlussführung 9 der jeweiligen Poldurchführung 3a, 3b in Richtung der Anschlussklemmen 5 führt und zum anderen das Verschienungsanschlusselement 4 der jeweiligen Poldurchführung 3a, 3b entgegen der Richtung der Anschlussführung 9 verläuft. Die Verbreiterung der Poldurchführungen 3a, 3b ist gemäss Fig. 2 im wesentlichen dreieckförmig ausgebildet, wobei die Poldurchführungen in diesem Bereich zueinander asymmetrisch angeordnet sind. Insbesondere im Bereich des Austritts der Poldurchführungen 3a, 3b aus dem Kondensatorgehäuse 1 verlaufen die Poldurchführungen 3a, 3b im wesentlichen zueinander parallel und sind gemäss Fig. 2 zueinander genügend beabstandet, damit Kurzschlüsse zwischen den Poldurchführungen 3a, 3b infolge von Spannungsüberschlägen vermieden werden. Ferner weist jede Poldurchführung 3a, 3b gemäss Fig. 2 jeweils drei Anschlussführungen 9 mit den daran endenden Anschlussenden 8 auf. Mit dieser Ausführungsform der Poldurchführungen 3a, 3b ist eine Verbindung des Kondensators zu einem Leistungshalbleitermodul 7 mit jeweils drei Anschlussklemmen 5 pro Pol möglich. Es versteht sich, dass die Anzahl der Anschlussführungen 9 mit einer vorgegeben Anzahl an Anschlussklemmen 5 variiert werden kann, wobei jede Poldurchführung 3a, 3b mindestens eine Anschlussführung 9 mit dem daran endenden Anschlussende 8 aufweist.

Die Anschlussenden 8 sind gemäss Fig. 2 vorzugsweise steckbar ausgebildet. Dadurch kann das Leistungshalbleitermodul 7 in besonders einfacher und schneller Weise an seinen Anschlussklemmen 5 mit den Poldurchführungen 3a, 3b und damit mit dem Kondensator verbunden werden, wodurch eine schnelle und somit effektive Wartung, beispielweise bei einem Austausch des Leistungshalbleitermoduls 7 und/oder des Kondensators, ermöglicht wird. Es hat sich als vorteilhaft erwiesen, die Anschlussenden 8 jeweils im wesentlichen gabelförmig auszuführen, wobei jedes Abschlussende 8 im wesentlichen eine U-Form bildet. Dadurch kann eine möglichst geringe Abnutzung der Anschlussenden 8 beim Herstellen der Steckverbindung mit den Anschlussklemmen 5 und beim Lösen dieser Verbindung erzielt werden kann. Zur Erhöhung der mechanischen Stabilität kann die Verbindung zwischen Leistungshalbleitermodul 7 und Kondensator an den Anschlussklemmen 5 zusätzlich durch eine Schraubenverbindung fixiert sein.

Darüber hinaus ist das Verschienungselement 4 gemäss Fig. 2 im Bereich des zweiten Winkels 10 zweischenklig ausgeführt, wobei die bereits erwähnte winkelförmige Ausbildung des Verschienungselementes 4 durch eine in diesem Winkel angebrachte plattenförmige Verbindung senkrecht zu den beiden Schenkel erfolgt. Die Verbindung weist vorzugsweise Löcher auf, damit die bereits erwähnte Verschienungseinrichtung mit herkömmliche Verbindungsmitteln angebracht werden kann.

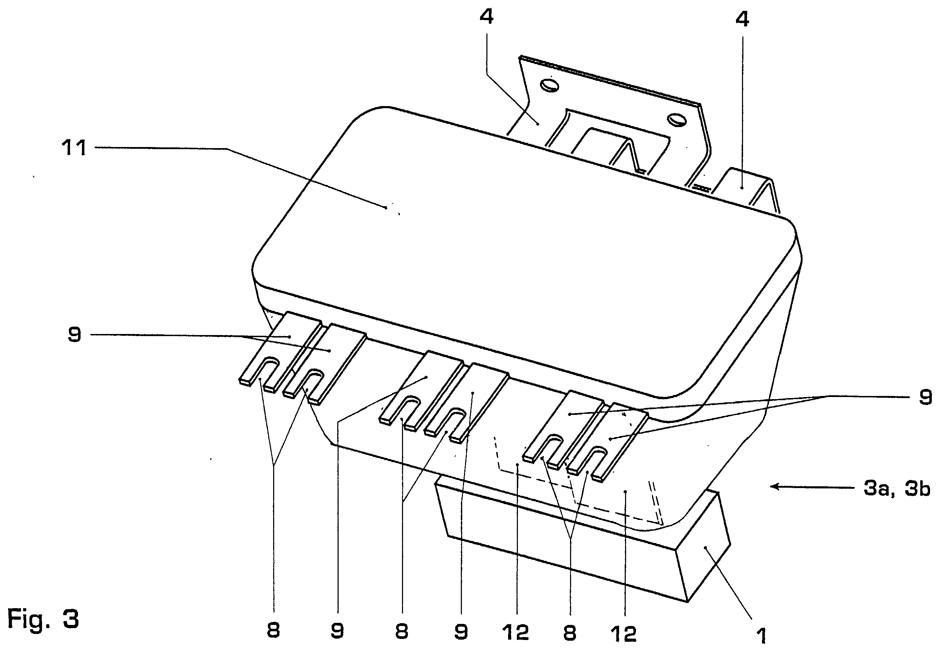

In Fig. 3 ist eine räumliche Darstellung einer zweiten Ausführungsform des erfindungsgemässen Kondensators für ein Leistungshalbleitermodul 7 dargestellt, wobei die Poldurchführungen 3a, 3b gemäss Fig. 1 und Fig. 2 ausgeführt sind. Erfindungemäss ist ein die Poldurchführungen 3a, 3b gegeneinander elektrisch isolierender Isolationskörper 11 vorgesehen, der die Poldurchführungen 3a, 3b zusätzlich gegenüber dem Kondensatorgehäuse 1 isoliert. Der Isolationskörper umschliesst die Poldurchführungen 3a, 3b insbesondere den aus dem Kondensatorgehäuse 1 austretenden Teil 12 der Poldurchführungen 3a, 3b, in dem diese im wesentlichen parallel geführt sind, wobei die Beabstandung der Poldurchführungen 3a, 3b erhalten bleibt. Desweiteren umschliesst der Isolationskörper 11 die Poldurchführungen 3a, 3b im Bereich des ersten Winkels 6, im Bereich des zweiten Winkels 10 und zumindest teilweise die Anschlussführungen 9 und die Verschienungsanschlusselemente 4. Dadurch wird ein eventuelles Auftreten eines Kurzschlusses infolge von Spannungsüberschlägen, insbesondere im Bereich des Austritts der Poldurchführungen 3a, 3b, aber auch in den anderen vorstehend beschriebenen und vom Isolationskörper 11 umschlossenen Bereiche der Poldurchführungen 3a, 3b erfolgreich vermindert. Weiterhin verhindert der Isolationskörper 11 eine Berührung der Poldurchführungen 3a, 3b, insbesondere bei mechanischen Einwirkungen auf die Poldurchführungen 3a, 3b, wie sie durch mechanische Schwingungen auftreten können. Die Poldurchführungen 3a, 3b werden somit mittels des Isolationskörpers 11 stabilisiert. Der Isolationskörper 11 ist vorzugsweise ein Gusskörper, so dass die vorstehend beschriebenen Bereiche der Poldurchführungen 3a, 3b vom Isolationsmaterial des Isolationskörpers 11 optimal umschlossen werden können.

Insgesamt stellt der erfindungsgemässe Kondensator eine besonders einfache und aufgrund seiner geringen Elementeanzahl auch kostengünstige und zuverlässig Lösung dar, die sich darüber hinaus durch eine geringe Gesamtinduktivität mit Einbezug der Leistungshalbleitermodulelemente auszeichnet.

### Bezugszeichenliste

- 1: Kondensatorgehäuse
- 2: Kondensatorwickel
- 3a, 3b: Poldurchführung
- 4: Verschienungsanschlusselement
- 5: Anschlussklemmen
- 6: erster Winkel
- 7: Leistungshalbleitermodul
- 8: Anschlussenden
- 9: Anschlussführung
- 10: zweiter Winkel
- 11: Isolationskörper
- 12: aus dem Kondensatorgehäuse austretender Teil der Poldurchführung

## Patentansprüche

1. Kondensator für ein Leistungshalbleitermodul (7), der ein Kondensatorgehäuse (1) umfasst und Poldurchführungen (3a; 3b) vom Inneren des Kondensatorgehäuses (1) nach aussen aufweist, wobei eine erste Poldurchführung (3a) einen Minuspol und eine zweite Poldurchführung (3b) einen Pluspol bildet, **dadurch gekennzeichnet, dass** die Poldurchführungen (3a; 3b) jeweils einstückig ausgebildet sind und dass Anschlussenden (8) der Poldurchführungen (3a; 3b) jeweils mit Anschlussklemmen (5) des Leistungshalbleitermoduls (7) verbindbar ausgeführt sind.

2. Kondensator nach Anspruch 1, **dadurch gekennzeichnet, dass** die Poldurchführungen (3a; 3b) ein plattenförmiges Profil aufweisen.

3. Kondensator nach einem der Ansprüche 1 oder 2, **dadurch gekennzeichnet, dass** die Anschlussenden (8) steckbar ausgebildet sind.

4. Kondensator nach Anspruch 3, **dadurch gekennzeichnet, dass** die Anschlussenden (8) jeweils im wesentlichen gabelförmig ausgeführt sind, wobei jedes Anschlussende (8) im wesentlichen eine U-Form bildet.

5. Kondensator nach einem der vorhergehenden Ansprüche, **dadurch gekennzeichnet, dass** jede Poldurchführung (3a; 3b) mindestens eine Anschlussführung (9) mit einem daran endenden Anschlussende (8) aufweist und dass jeweils ein aus dem Kondensatorgehäuse (1) austretender Teil (12) der Poldurchführungen (3a; 3b) mit der Anschlussführung (9) der jeweiligen Poldurchführung (3a; 3b) einen ersten Winkel (6) bilden.

6. Kondensator nach Anspruch 5, **dadurch gekennzeichnet, dass** die Anschlussführung (9) in die Richtung der Anschlussklemmen (5) verläuft.

7. Kondensator nach einem der Ansprüche 5 oder 6, **dadurch gekennzeichnet, dass** jede Poldurchführung (3a; 3b) im Bereich des ersten Winkels (6) einen zweiten Winkel (10) aufweist, der den Anschlussklemmen (5) abgewandt ist, und dass jede Poldurchführung (3a; 3b) ein Verschienungsanschlusselement (4) umfasst, das jeweils mit dem aus dem Kondensatorgehäuse (1) austretenden Teil (12) der Poldurchführungen (3a; 3b) den zweiten Winkel (10) bildet, wobei das Verschienungsanschlusselement (4) entgegen der Richtung der Anschlussführung (9) verläuft.

8. Kondensator nach Anspruch 7, **dadurch gekennzeichnet, dass** das Verschienungsanschlusselement (4) winkelförmig ausgebildet ist.

9. Kondensator nach Anspruch 8, **dadurch gekennzeichnet, dass** die Verschienungsanschlusselemente (4) der Poldurchführungen (3a; 3b) zueinander entgegengesetzte Abschlussrichtungen aufweisen.

10. Kondensator nach den Ansprüchen 5 und 7, **dadurch gekennzeichnet, dass** die Poldurchführungen (3a; 3b) im Bereich des Austritts aus dem Kondensatorgehäuse (1) eine flächige Verbreiterung bis zum ersten Winkel (6) beziehungsweise bis zum zweiten Winkel (10) aufweist.

11. Kondensator nach Anspruch 10, **dadurch gekennzeichnet, dass** ein die Poldurchführungen (3a; 3b) gegeneinander elektrisch isolierender Isolationskörper (11) vorgesehen ist.

12. Kondensator nach Anspruch 10, **dadurch gekennzeichnet, dass** der Isolationskörper (11) die Poldurchführungen (3a; 3b) im Bereich des Austritts der Poldurchführungen (3a; 3b) aus dem Kondensatorgehäuse (1) umschliesst.

13. Kondensator nach einem der Ansprüche 10 bis 12, **dadurch gekennzeichnet, dass** der Isolationskörper (11) die Poldurchführungen (3a; 3b) im Bereich des ersten Winkels (6) und im Bereich des zweiten Winkels (10) umschliesst.

14. Kondensator nach einem der Ansprüche 10 bis 13, **dadurch gekennzeichnet, dass** der Isolationskörper (11) die Anschlussführungen (9) und die Verschienungsanschlusselemente (4) mindestens teilweise umschliesst.
